# EUROPEAN PATENT SPECIFICATION

(11) **EP 1 068 601 B1**
(45) Date of publication and mention of the grant of the patent: **30.07.2003**
(21) Application number: 99913349.9
(22) Date of filing: 06.04.1999
(51) Int. Cl.: G08B 17/10, H02H 3/33

(54) **METHOD FOR SWITCHING OFF A POWER SUPPLY IN A DANGEROUS SITUATION AND A CORRESPONDING SAFEGUARDING ARRANGEMENT**
VERFAHREN ZUR ABSCHALTUNG EINER STROMVERSORGUNG IN EINER GEFÄHRLICHEN SITUATION UND ENTSPRECHENDES SICHERHEITSSYSTEM
PROCEDE D'INTERRUPTION DE L'ALIMENTATION ELECTRIQUE EN CAS DE DANGER, ET SYSTEME DE SECURITE ASSOCIE

(30) Priority: 06.04.1998 FI 980789
(43) Date of publication of application: 17.01.2001
(73) Proprietor: Kaarnamo, Antti, 04330 Lahela (FI)
(72) Inventor: Kaarnamo, Antti, 04330 Lahela (FI)
(74) Representative: Tanhua, Pekka Vilhelm
(86) International application number: FI9900287
(87) International publication number: WO99052090

(56) References cited:
- EP-A1- 0 268 107
- FR-A1- 2 543 839
- FR-A1- 2 643 195

## Description

The invention relates to a method as defined in the preamble of claim 1 for interrupting delivery of current from mains in a dangerous situation. Such situations are for instance a starting fire, a gas leakage, a sudden rise or drop in temperature.

The invention also relates to a safety arrangement for carrying out the method as defined in the preamble of claim 2.

Prior art document FR-A-2643195 discloses an automatic differential current circuit breaker triggered by a sensor detecting an anormal operating condition so as to disconnect the power supply before a differential current fault arises.

DK Patent Application 293/93 has disclosed a safety interrupter which, in the event of an alarm, generates adequate current passing over a fault current relay, on the basis of which delivery of current is completely interrupted at the main distribution board. A safety interrupter prevents serious accidents, such as a gas explosion following a gas leakage or a fire starting from an electric appliance. The safety interrupter comprises a detector, such as a gas detector, for detecting gas emissions, and a relay, in which the terminals of the controlled switch are connected to the mains voltage on the one hand, and over a resistor to the ground terminal on the other hand. The safety interrupter is connected to a socket. When the detector detects a risk situation such as a gas leakage in the environment, it sends an impulse to the relay, which in turn connects the switch over the mains voltage resistor to the ground. Thus the fault current relay located before the fuse blocks of a block distribution board detects the low current supplied to the ground, and as a consequence, the delivery of current is interrupted from the main distribution board onwards.

The prior art safety interrupter disclosed by the Danish patent application has the inconvenience of the operating voltage being connected over the relay and the resistor to the ground. This arrangement requires meticulous device design and safe components, because in a risk situation, the operating voltage proper is connected over the resistor to a ground, e.g. a heat radiator or any other ground point not reliable in terms of electric installations.

The safety interrupter above also has the drawback of being connected to a socket. Such a safety device is not reliable in terms of installation, because anyone in the room may disconnect this safety device inadvertently without any tools as a normal operation, and then forget to reconnect it, and then the protective effect is lost for an undetermined period of time.

The prior art safety interrupter has the further drawback of the entire main distribution board being protected by one single fault current protection. We note that a variety of devices is connected to the main distribution board, such as for instance one or more stoves, electric radiators, hot-water tanks etc. These devices generate small leakage currents even under normal conditions, and when summed, such leakage currents frequently release the common fault current protection quite without reason.

The purpose of the invention is to overcome the shortcomings connected with the safety interrupter described above. Another purpose of the invention is to provide a new method for interrupting delivery of current from mains in a risk situation and the related safety arrangement.

The method in accordance with the invention is characterised by the features defined in claim 1. The safety arrangement of the invention, in turn, is characterised by the features defined in claim 3. The dependent claims define preferred embodiments of the invention.

The method of the invention for interrupting delivery of current from mains in a risk situation utilises a smoke detector, such as a fire alarm or a similar environment detector to give a message, such as an impulse, when the surrounding conditions change and exceed pre-set limits, and a relay unit or similar switch connected to this, which are brought into a conductive state by a message from the smoke detector. In accordance with the invention, the relay unit serves to electrically connect the grounding wire and the neutral wire of the network, and then part of the return current is directed to the grounding wire on the basis of the conductor resistors of these wires, and in a normal situation, there will then arise an imbalance situation in the zero sum current between the phase and neutral wires, where the value of this sum current different from zero exceeds the pre-set limit value, which is detected and which results in interruption of the delivery of current.

The conductor resistors of the grounding wire and the neutral wire are nearly equal, and then about 50% of the return current is directed to the grounding wire, when these wires are connected by the relay unit. Normally no current passes between the phase wires and the neutral wires, and now the connection of these will entail imbalance in the sum current which used to be zero. When the value of the sum current different from zero exceeds the excitation current value of the fault current safety switch protecting the electric block, the fault current safety switch will be immediately actuated, and the delivery of current thus interrupted.

In this context, an environment detector stands for a detector which reacts on a specific predetermined change, such as a change in gas concentration, temperature or radiation, in the immediate vicinity of the detector. The detector is for instance a smoke detector, such as one or more fire alarms cabled to the same relay unit, or a temperature detector, a radiation detector or the like.

The benefit of the invention is that the interruption of the delivery of current from mains in a risk situation can be performed to the desired extent in a building for instance, and what is more, by means of simple method operations. The mains is a common mains or a small closed electric network with a limited number of potential loads.

The invention has the further advantage that the actual safety arrangement can be implemented with the use of existing, commercially available and world-wide accepted components and devices.

The invention also has the advantage that especially apartment fires caused by electrical appliances can be notably reduced by means of the method and the safety arrangement of the invention.

The invention has the advantage of a straightforward implementation and of reliability. The safety arrangement of the invention does not require new additional fuses/automatic wire protection devices, nor, in most cases, new wiring between the block board and e.g. the relay unit, which would incur high labour costs. By contrast, if several fire alarms connected in parallel are used, they will in fact require wiring in the area of the different rooms.

The invention has the considerable advantage of the sum current imbalance being generated by dividing the existing return current, and no additional components such as resistors or the like will be required to connect the operating voltage to a ground for instance.

The invention also has the advantage of reliable retrofitting by an electric contractor in conjunction with ordinary electric refitting operations also in existing apartments or the like. In addition, the EU directive taking effect in 1999 will require a compulsory fire alarm in new apartments, and then the safety arrangement based on the invention can be most advantageously economically included in the electric contract from the very beginning, so as to replace an existing battery-operated fire alarm.

The invention also has the advantage that the delivery of current can be interrupted in a risk situation in a restricted area, such as a specific part of a room or even one single room. In this way, an apartment fire starting e.g. from an electric appliance such as a television set can be effectively prevented at once, once a small amount of smoke has developed in the room to be monitored, such as for instance common premises in cellular apartments and service flats. At the other extreme, the selected protective level may comprise interruption of the voltage of a distribution board supplying the electric blocks of a desired unit of rooms. In this conjunction, the difference of the safety arrangement of the invention compared to the prior art Danish safety intenuptor may be considered the use of selective fault current units with an excitation current of 1A and 3A commonly available on the market, which can be connected to actuate existing switches or switches installed in this connection. To actuate these selective fault current units, remote releases available as extra equipment and mounted on the distribution board are used, which are in turn controlled in accordance with the invention by a non-delay 30 mA fault current safety switch used as a protection of single electric blocks, the relay unit of the fire alarm of the invention generating a sum current sufficiently different from zero, resulting thus in the actuating procedure. Such a system of the invention for interrupting delivery of current to a distribution board which is selectively performed with intermediate steps is a more stable release process, actuated to a larger extent by the detection of the original environment detector, than the prior art Danish safety interruptor.

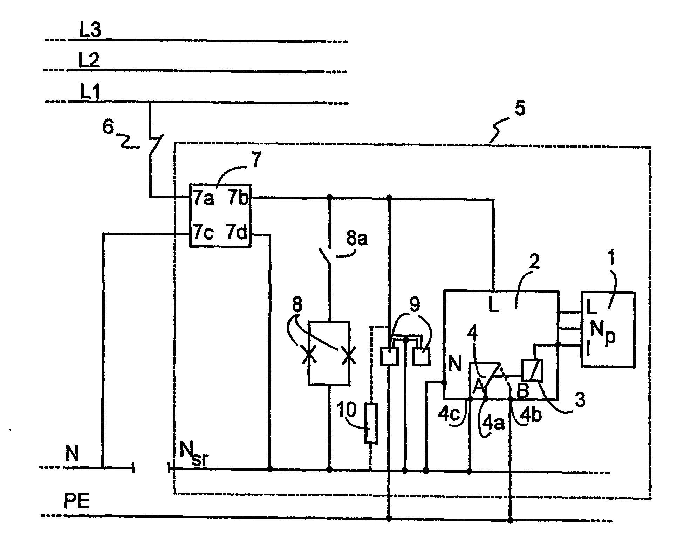

The invention and its other advantages will be described in detail below with reference to the accompanying drawing, which is a schematic view of a relatively limited safety arrangement of the invention installed in an apartment.

In this case, the mains comprises phase wires L1, L2, L3, neutral wire N and protective, i.e. grounding wire PE. Electric block 5 has been connected to phase wire L1 over a fuse 6 or similar. Electric block 5 includes ligth fittings 8, their light switch 8a and a number of sockets 9. The safety arrangement in accordance with the invention has been connected to electric block 5.

The safety arrangement of the invention comprises a smoke detector, such as a fire alarm 1, a relay unit 2 and a fault current safety switch 7. Fire alarm 1 is protected with an accumulator or a battery and is supplied with mains current, and it can be directly connected to relay unit 2. Fire alarm 1 and relay unit 2 are mutually connected with the real delivery of current wire L, neutral wire Np and impulse wire I. Relay unit 2 comprises a relay coil 3 and the relay switch 4 proper, which comprises the central terminal 4c of the switch 4 and optional contact terminals 4a, 4b. The central terminal 4c of the relay switch 4 and the second optional terminal 4b have been connected to the neutral wire Nₛᵣ and to the grounding wire PE accordingly. The first optional terminal 4a of the relay switch 4 is free; it has not been connected at all.

Fire alarm 1 and relay unit 2 have been connected to the same electric block 5 and are thus protected by one fuse 6. The fault current safety switch 7 included in the safety arrangement is connected between fuse 6 and electric block 5 such that the supply voltage of the mains passes from phase wire L1 to electric block 5 over terminals 7a, 7b with the neutral wire N outside electric block 5 connected to neutral wire Nₛᵣ of electric block 5 over terminals 7c, 7d.

The battery-protected fire alarm 1 may be of any type known *per se,* as for instance a ionisation-based, mains voltage-operated smoke detector equipped with accumulator protection marketed under the trade name BRK-Electronics Model 86 E. Relay unit 2 may accordingly be a relay unit equipped with an amplifier manufactured by the same manufacturer for this fire alarm 1. Several fire alarms, such as a maximun of 12 units, may be advantageously connected to one relay unit.

The fault current safety switch 7 is as such a safety interruptor known *per se.* The fault current safety switch 7 operates according to the sum current principle. In a normal situation, the sum current of phase wire L1 and neutral wire Nₛᵣ is zero. In fault situations, the sum current is different from zero. When a fault occurs in electric block 5, part of the current supplied over phase wire L1 to the electric block, the fault current, will return to the ground e.g. over grounding wire PE. This results in current imbalance. If the fault current exceeds a predetermined excitation current value of the fault current safety switch 7, the fault current safety switch 7 will be immediately actuated, interrupting the delivery of current from the phase wire L1 to electric block 5. Optionally fault current safety switch 7 can be used to control another switch to interrupt the delivery of current to electric block 5. Then the structure chosen for fault current safety switch 7 can be a "separate fault current block", which can then be used to control a high-power switch from the same device manufacturer to interrupt the delivery of current to the monitored part of the mains. The excitation current value of the fault current safety switch 7 is e.g. 30 mA.

The safety arrangement operates as follows. When fire alarm 1 detects for instance smoke in a room, it sends an impulse to relay unit 2 and especially to relay control coil 3. This pulls switch 4 from rest position A into operating position B. In operating position B switch 4 is closed, i.e. terminals 4c, 4b are interconnected, and then neutral wire Nₛᵣ and grounding wire PE are interconnected. In rest position A switch 4 is open and neutral wire Nₛᵣ and grounding wire PE are not electrically connected to each other. It should be noted that neither of said wires Nₛᵣ and PE have any significant potential difference compared to the grounding of the electric system. Thus the operation of relay unit 2 will not cause any short-circuiting voltage or current peak in electric block 5, and such a peak, even at a minimum, would release or blow fuse 6 protecting the electric block. Switching switch 4 into operating position B results in neutral wire N and grounding wire PE being interconnected, and on the basis of the conductor resistors of these, part (usually 50%) of the return current of the electric block is directed to grounding wire PE. If this part of the return current exceeds the excitation current of the fault current safety switch 7, e.g. 30 mA, the fault current safety switch 7 will operate, interrupting the delivery of current to electric block 5. If the smoke and the fire originate from an electric device, such as a television set, the delivery of current to this device will be interrupted, In this way, the electric device will be disconnected from the mains as soon as the fire starts, and thus the entire fire will most likely subdue from the very beginning.

It should be noted that fire alarm 1 is equipped with a reserve power source of its own, such as an accumulator, and then the fire alarm goes on operating, warning about a dangerous situation with an alarm signal also after the mains voltage has been interrupted.

In order to maintain continuous operating readiness of the safety arrangement, the fault current safety switch 7 requires a small base load, which is typically e.g. 60 mA with a mains voltage of 230 VAC (such as the voltage of phase conductor L1). Expressed as electric power this base load is about 15 W, electric loads in this power class being among other things incandescence, i.e. readiness for working, of the picture tube in a television set A continuously prevailing base load can be ensured by providing electric block 5, such as the switch box or instrument case of the room to be protected, with a firmly connected resistor 10. This resistor 10 may for instance be a 15 W heating resistor, which can be performed by means of a self-adjusting heating cable. On the other hand, if no electric load is in operation, there will be no need for the safety arrangement to be actuated.

The fault current safety switch 7 of the safety arrangement, which is preferably a switch fastened with a DIN rail, can be retrofitted in a mounting casing disposed in the block distribution board or in its immediate vicinity. A mounting casing is principally used in connection with fuse block boards. It should be noted that new electric installations do not require additional cabling or wiring between the room protected with a fire alarm and the block distribution board supplying it. In old electric installations (before 1985 in Finland) an additional grounding wire (PEN) shall principally be added between the delivery of current wire L1 or dip wires of the room to be protected and the supplying block distribution board. Fire alarm 1 can be correctly disposed in the room to be protected from a fire-technical point of view, and new cabling will be required only from the fire alarm to the mains switch box closest to the room to be protected.

The invention is not restricted merely to the embodiment example above, many variants being conceivable within the scope of the inventive idea defined by the claims.

## Claims

1. A method for interrupting delivery of current from mains in a dangerous situation, utilising at least one smoke detector, such as a fire alarm (1) or a similar environment detector to give a message, such as an impulse, when the surrounding conditions change and exceed pre-set limits, and a relay unit (2) or similar switch connected to this, which is brought into conductive state by a message from the smoke detector, **characterised in that** the realy unit (2) serves to electrically connect the grounding wire (PE) and the neutral wire (Nₛᵣ) of the electric network, and then part of the return current is directed on the basis of the conductor resistors of these wires to the grounding wire (PE), and then, in a normal situation, imbalance will occur in the zero sum current between the phase wire (L1) and the neutral wire (Nₛᵣ), where this sum current value different from zero exceeds a pre-set limit value, which is detected and results in interruption of the delivery of current.

2. A method as claimed in claim 1, **characterised in that** the fault current is monitored in the electric block (5) determined by the mains fuse (6) to which the fire alarm (1) has also been connected, the delivery of current to the mains part (5) protected by this fuse (6) being interrupted in a risk situation.

3. A safety arrangement for interrupting delivery of current from mains in a dangerous situation, comprising a fault current safety switch 7, at least one smoke detector, such as a fire alarm (1) or a similar environment detector to give a message, such as an impulse, when the surrounding conditions change and exceed pre-set limits, and a relay unit (2) or similar switch unit connected to this, comprising a relay switch (4) or a similar switch, which is brought into conductive state, i.e. operating position (B) by a message from the fire alarm (1), **characterised in that** the relay switch (4) included in the relay unit (2) has been disposed between the neutral wire (Nₛᵣ) and the grounding wire (PE) of the electric network, the relay switch (4) when brought into conductive state i.e. operating position (B) resulting in part of the return current being directed on the basis of the conductor resistors to the grounding wire (PE), and in a normal situation there will then be imbalance in the zero sum current of the phase wire (L1) and the neutral wire (Nₛᵣ), and when this sum current value different from zero exceeds the excitation current value of the fault current safety switch (7), the fault current safety switch (7) is actuated, interrupting the delivery of current.

4. A safety arrangement as claimed in claim 3, **characterised in that** the fault current safety switch (7) has been disposed in connection with the mains fuse (6) determining the electric block (5) to which the fire alarm (1) has also been connected, the delivery of current being interrupted to the mains part protected by this fuse (6) in a risk situation.

5. A safety arrangement as claimed in claim 4, **characterised in that**, in order to maintain continuous operating readiness of the fault current safety switch (7), a resistor (10) has been preferably firmly connected to the electric block (5).

## Patentansprüche

1. Verfahren zum Unterbrechen einer Stromzufuhr von einem Versorgungsnetz in einer gefährlichen Situation unter Verwendung zumindest eines Rauchdetektors, wie beispielsweise eines Feueralarms (1) oder eines ähnlichen Umgebungsmelders zur Abgabe einer Meldung, wie z.B. eines Impulses, wenn sich die Umgebungszustände ändern und vorbestimmte Grenzen überschritten werden, und einer Relaiseinheit (2) oder einem ähnlichen daran angeschlossenen Schalter, die durch eine Meldung von dem Rauchdetektor in einen Leitungszustand gebracht wird,
**dadurch gekennzeichnet, dass** die Relaiseinheit (2) dazu dient, die Erdungsleitung (PE) mit dem Nullleiter (Nₛᵣ) des elektrischen Netzes zu verbinden, wobei ein Teil des Rückstroms auf der Basis der Leitungswiderstände dieser Leitungen dann an die Erdleitung (PE) geleitet wird, und dann, in einer normalen Situation ein Ungleichgewicht im Nullsummenstrom zwischen der Phasenleitung (L1) und dem Nullleiter (Nₛᵣ) auftritt, wobei dieser von Null abweichende Summenstromwert einen vorbestimmten Grenzwert überschreitet, was gemessen wird und in einer Unterbrechung der Stromzufuhr resultiert.

2. Verfahren nach Anspruch 1,
**dadurch gekennzeichnet, dass** der Fehlerstrom in dem elektrischen Block (5) unter Bestimmung der Versorgungsnetz-Sicherung (6) überwacht wird, an der auch der Feueralarm (1) angeschlossen ist, wobei die Stromzufuhr an den Teil (5) des Versorgungsnetzes in einer Gefahrensituation unterbrochen wird, der durch diese Sicherung (6) geschützt ist.

3. Sicherheitssystem zum Unterbrechen einer Stromzufuhr von einem Versorgungsnetz in einer gefährlichen Situation, aufweisend einen Fehlerstrom-Sicherheitsschalter (7), mindestens einen Rauchdetektor, wie beispielsweise einen Feueralarm (1) oder einen ähnlichen Umgebungsmelder zur Abgabe einer Meldung, wie z.B. einen Impuls, wenn sich die Umgebungszustände ändern und vorbestimmte Grenzen überschritten werden, und eine Relaiseinheit (2) oder eine ähnliche daran angeschlossene Schaltereinheit, die einen Relaisschalter (4) oder einen ähnlichen Schalter umfasst, der durch eine Meldung von dem Feueralarm (1) in einen Leitungszustand, d.h. in eine Betriebsposition (B) gebracht wird, **dadurch gekennzeichnet, dass** der in der Relaiseinheit (2) enthaltene Relaisschalter (4) zwischen dem Nullleiter (Nₛᵣ) und der Erdungsleitung (PE) des elektrischen Netzes angeordnet ist, wobei der Relaisschalter (4), wenn dieser in einen Leitungszustand, d.h. in eine Betriebsposition (B) gebracht ist, dazu führt, dass ein Teil des Rückstromes auf der Basis der Leitungswiderstände an die Erdungsleitung (PE) geleitet wird, wobei dann in einer normalen Situation ein Ungleichgewicht im Nullsummenstrom der Phasenleitung (L1) und dem Nullleiter (Nₛᵣ) auftritt, wobei der Fehlerstrom-Sicherheitsschalter (7) aktiviert wird und die Stromzuführ unterbricht, wenn dieser von Null abweichende Summenstromwert den Erreger-Stromwert des Fehlerstrom-Sicherheitsschalters (7) überschreitet.

4. Sicherheitssystem nach Anspruch 3,
**dadurch gekennzeichnet, dass** der Fehlerstrom-Sicherheitsschalter (7) in Verbindung mit der Versorgungsnetz-Sicherung (6) unter Bestimmung des elektrischen Blocks (5) angeordnet ist, an der auch der Feueralarm (1) angeschlossen ist, wobei die Stromzufuhr an den Teil des Versorgungsnetzes in einer Gefahrensituation unterbrochen ist, der durch diese Sicherung (6) geschützt ist

5. Sicherheitssystem nach Anspruch 4,
**dadurch gekennzeichnet, dass** zum Aufrechterhalten einer kontinuierlichen Betriebsbereitschaft des Fehlerstrom-Sicherheitsschalters (7) ein Widerstand (10) vorzugsweise fest an dem elektrischen Block (5) angeschlossen ist.

## Revendications

1. Procédé pour interrompre l'alimentation en courant d'un réseau électrique dans une situation dangereuse, utilisant au moins un détecteur de fumée, tel qu'un avertisseur d'incendie (1) ou un détecteur d'environnement similaire pour délivrer un message, tel qu'une impulsion, lorsque les conditions environnantes changent et dépassent des limites prédéfinies, et une unité de relais (2) ou un commutateur similaire relié à cela, qui est mis en état conducteur par un message du détecteur de fumée, **caractérisé en ce que** l'unité de relais (2) sert à relier électriquement le fil de terre (PE) et le fil neutre (Nₛᵣ) du réseau électrique, et ensuite une partie du courant réfléchi est dirigé sur la base des résistances de conducteur de ces fils vers le fil de terre (PE), puis, dans une situation normale, un déséquilibre se produira dans le courant de somme zéro entre le fil de phase (L1) et le fil neutre (Nₛᵣ), cette valeur de courant de somme différente de zéro dépassant une valeur limite prédéfinie, qui est détectée et entraîne l'interruption de l'alimentation de courant.

2. Procédé selon la revendication 1, **caractérisé en ce que** le courant de défaut est contrôlé dans le bloc électrique (5) déterminé par le fusible (6) général auquel l'avertisseur d'incendie (1) a aussi été relié, l'alimentation de courant de la partie secteur (5) protégée par ce fusible (6) étant interrompue dans une situation de risque.

3. Dispositif de sécurité pour interrompre l'alimentation en courant du secteur dans une situation dangereuse, comprenant un interrupteur de sécurité à courant de défaut 7, au moins un détecteur de fumée, tel qu'un avertisseur d'incendie (1) ou un détecteur d'environnement similaire pour donner un message, comme une impulsion, lorsque les conditions environnantes changent et dépassent des limites prédéfinies, et une unité de relais (2) ou une unité de commutation similaire reliée à cela, comprenant un commutateur à relais (4) ou un commutateur similaire, qui est mis à l'état conducteur, c'est-à-dire en position de fonctionnement (B) par un message de l'avertisseur d'incendie (1), **caractérisé en ce que** le commutateur à relais (4) compris dans l'unité de relais (2) a été disposé entre le fil neutre (Nₛᵣ) et le fil de terre (PE) du réseau électrique, le commutateur à relais (4) une fois mis à l'état conducteur, c.-à-d. en position de fonctionnement (B) fait qu'une partie du courant réfléchi est dirigée sur la base des résistances de conducteur vers le fil de terre (PE), et dans une situation normale, il y aura ensuite un déséquilibre dans le courant de somme zéro du fil de phase (L1) et du fil neutre (Nₛᵣ) et lorsque cette valeur de courant de somme différente de zéro dépasse la valeur du courant d'excitation de l'interrupteur de sécurité à courant de défaut (7), l'interrupteur de sécurité à courant de défaut (7) est actionné, interrompant l'alimentation en courant.

4. Dispositif de sécurité selon la revendication 3, **caractérisé en ce que** l'interrupteur de sécurité à courant de défaut (7) a été disposé en relation avec le fusible secteur (6) déterminant le bloc électrique (5) auquel l'avertisseur d'incendie (1) a aussi été relié, l'alimentation en courant étant interrompue à la partie secteur protégée par ce fusible (6) dans une situation de risque.

5. Dispositif de sécurité selon la revendication 4, **caractérisé en ce que**, de manière à maintenir l'aptitude de fonctionnement continue de l'interrupteur de sécurité à courant de défaut (7), une résistance (10) a été de préférence fermement reliée au bloc électrique (5).
